Europäisches Patentamt

European Patent Office

Office européen des brevets

(19)

(11) Veröffentlichungsnummer: **0 155 411**

**A2**

(12) **EUROPÄISCHE PATENTANMELDUNG**

(21) Anmeldenummer: **84201941.6**

(22) Anmeldetag: **24.12.84**

(51) Int. Cl.⁴: **G 02 B 5/00**

(30) Priorität: **24.01.84 DE 3402258**

(43) Veröffentlichungstag der Anmeldung:
**25.09.85 Patentblatt 85/39**

(84) Benannte Vertragsstaaten:
**DE FR GB IT NL SE**

(71) Anmelder **Philips Patentverwaltung GmbH**
**Billstrasse 80**
**D-2000 Hamburg 28(DE)**

(84) Benannte Vertragsstaaten:
**DE**

(71) Anmelder: **N.V. Philips' Gloeilampenfabrieken**
**Groenewoudseweg 1**
**NL-5621 BA Eindhoven(NL)**

(84) Benannte Vertragsstaaten:
**FR GB IT NL SE**

(72) Erfinder: **Böhm, Heinz, Dipl.-Phys.**
**Kneippstrasse 2**
**D-8520 Erlangen(DE)**

(74) Vertreter: **Peuckert, Hermann et al,**
**Philips Patentverwaltung GmbH Billstrasse 80 Postfach**
**10 51 49**
**D-2000 Hamburg 28(DE)**

(54) **Optisches Bauelement zur Zerlegung des Lichtes nach Wellenlängen.**

(57) Eine Vielzahl dünner, aus der Dampfphase abgeschiedener Glasschichten ergibt bei linearem Brechungsindexverlauf Bauelemente, deren Dispersion sich nach ihrer Länge mißt.

Zwei verdrehbar gelagerte Bauelemente ergeben ein optisches Element mit einstellbarem Dispersionsgrad bei konstantem Abstand von zueinander parallelen optischen Oberflächen.

FIG.1

EP 0 155 411 A2

0155411

Philips Patentverwaltung GmbH       PHD 84 303 EP
N.V. Philips' Gloeilampenfabrieken   29.11.1984


Optisches Bauelement zur Zerlegung des Lichtes
nach Wellenlängen

Die Erfindung betrifft ein optisches Bauelement
zur Zerlegung des Lichtes nach Wellenlängen, das
insbesondere zur Anwendung bei der optischen Nachrichtenübertragung geeignet ist. Solche Bauelemente werden beispielsweise beim Wellenlängenmultiplexen in der optischen Übertragungstechnik benötigt.

Die als lichtzerlegende Bauelemente bekannten Dispersionsprismen haben von der zu ihrem Bau verwendeten Glassorte abhängige Dispersionseigenschaften. Die Dispersionsprismen haben den Nachteil,
daß sich bei relativ großen Durchgangsverlusten
des Lichtes nur ein relativ geringer Dispersionsgrad erzielen läßt.

Der Erfindung liegt die Aufgabe zugrunde, ein
Licht nach Wellenlängen zerlegendes Bauelement zu
schaffen, dessen Dispersionseigenschaften sich auf
eine besonders vielfältige Weise gezielt einstellen lassen und wobei die Durchgangsverluste relativ niedrig sind.

- 2 -

- 2 -

Diese Aufgabe wird erfindungsgemäß mit einem Bauelement gelöst, das dadurch gekennzeichnet ist, daß es aus einer Vielzahl auf einer Unterlage aus der Dampfphase abgeschiedener Glasschichten mit jeweils unterschiedlichem Brechungsindex besteht und daß optisch wirksame Oberflächen vorgesehen sind, die die Ebene der Unterlage durchschneiden.

Die Dispersionseigenschaften der Bauelemente nach der Erfindung werden durch den Brechungsindexverlauf im Schichtaufbau, durch den Abstand zwischen den optisch wirksamen Oberflächen und durch ihre Anordnung (Neigung) zueinander bestimmt. Der Brechungsindexverlauf kann linear oder nichtlinear sein oder auch in einem Teil des Bauelementes linear und in einem Teil des Bauelementes nichtlinear. Im letzten Falle kann sich beispielsweise ein sowohl zur Zerlegung des Lichtes nach Wellenlängen als auch zur Abbildung geeignetes Bauelement ergeben. Mit zusätzlichen Abbildungseigenschaften kann ein lichtzerlegendes Bauelement auch durch zylindrische, inbesondere kreiszylindrische oder durch sphärische Gestaltung der optisch wirksamen Oberflächen versehen sein, wobei die erzeugende Linie des Zylinders auf die Ebene der Unterlage ausgerichtet ist.

Die Bauelemente können dadurch hergestellt werden, daß auf eine flache Unterlage aus z.B. Quarzglas Schichten aus dotiertem $SiO_2$, z.B. mit $GeO_2$ dotiertem $SiO_2$, aus der Dampfphase abgeschieden werden. Zu diesem Zweck ist z.B. das sogenannte

- 3 -

nichtisotherme PCVD-Verfahren geeignet (siehe DE-PS 24 44 100). Unter einem nichtisothermen Plasma-CVD-Verfahren ist ein Verfahren zu verstehen, bei dem mit einem sogenannten kalten Plasma gearbeitet wird, in dem nur Elektronen eine hohe kinetische Energie besitzen. Mit einem solchen Plasma kann man selbst Gasgemische zur Reaktion bringen, die thermisch nicht reaktiv sind. Weiter hat es sich gezeigt, daß sich mit dem nichtisothermen PCVD-Verfahren bei ziemlich niedriger Temperatur direkt aus der Gasphase glasartige Schichten abscheiden lassen, so daß sich eine nachfolgende Erhitzung zur Verglasung erübrigt, wie sie bei Verfahren bei denen eine Glasrußschicht abgeschieden wird, notwendig ist. Ein weiterer Vorteil bei der Anwendung dieses Verfahrens ist, daß sich bei Abscheidung bei niedriger Temperatur, d.h. bei Temperaturen zwischen Raumtemperatur und 300 °C, ein etwaiger Unterschied in den Wärmeausdehnungskoeffizienten des Glasplattenmaterials und der abgeschiedenen Schichten nicht nachteilig bemerkbar macht.

Einzelne Bauelemente lassen sich aus einer mit Glasschichten versehenen Unterlage durch einfache, mechanische Trennverfahren wie sägen, ritzen, brechen herausnehmen, wobei zugleich die optisch wirksamen Oberflächen gebildet werden können. Die nach dem Trennverfahren gebildeten Oberflächen können hierzu nötigenfalls noch nachpoliert werden. Es können in dieser Weise Bauelemente mit in weiten Grenzen auswählbarem Dispersionsgrad herge-

- 4 -

stellt werden. Die Schichten können mit hoher
Reinheit aus der Dampfphase abgeschieden werden.
Hierdurch können Bauelemente mit äußerst geringen
Lichtverlusten hergestellt werden.

Die Erfindung wird mit weiteren, in den Unteransprüchen angegebenen vorteilhaften Ausgestaltungen
an Hand der in der Zeichnung schematisch dargestellten Ausführungsbeispiele näher erläutert und
beschrieben. Es zeigen:

Fig. 1: Im Schnitt ein Herstellungsstadium eines
lichtzerlegenden Bauelements.

Fig. 2: Im Schnitt ein optisches System aus drei
lichtzerlegenden Bauelementen.

Fig. 3: In dreidimensionaler Ansicht eine andere
Version eines optischen Systems lichtzerlegender Bauelemente.

Fig. 4: In dreidimensionaler. Ansicht eine weitere
Ausgestaltung eine lichtzerlegenden Bauelementes.

Fig. 5: In dreidimensionaler Ansicht eine andere
Ausgestaltung eines lichtzerlegendes Bauelementes.

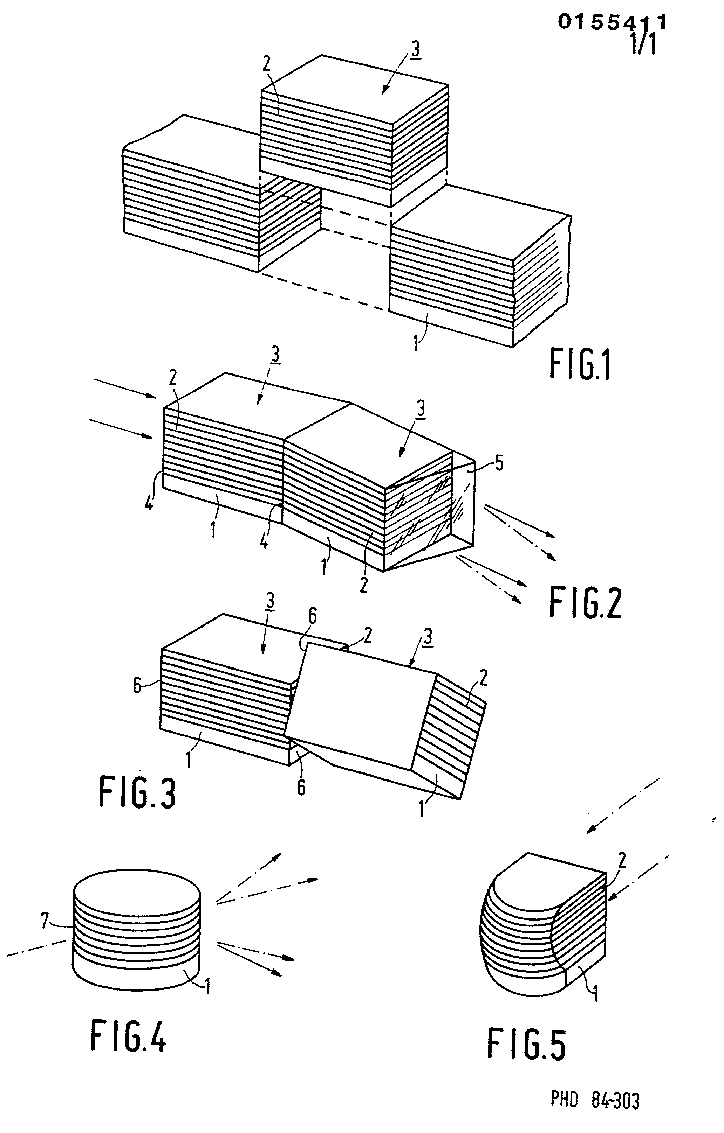

Die Fig. 1 zeigt einen Teil des Herstellungsprozesses. Auf einer Glasplatte 1 wird eine Vielzahl
dünner mit $GeO_2$ dotierter $SiO_2$-Schichten 2 nach
dem nichtisothermen PCVD-Verfahren hergestellt,
wobei die Dotierung derart vorgenommen wird, daß
sich ein linearer Brechungsindexverlauf ergibt.
Die Schichtdicken betragen jeweils 0,5 um. Es

- 5 -

wurden in einem praktischen Fall etwa 2.000 Schichten aufgetragen. Die Glasplatte 1 wird in Bauelemente 3 zerschnitten (z.B. gesägt oder geritzt und gebrochen).

Die Erfindung ist durch Kombination gleichartiger Bauelemente zu einem zusammengesetzten Bauelement weiter ausgestaltbar wie in Fig. 2 dargestellt ist. Die Begrenzungsflächen 4 der für gleiche Teile mit den gleichen Bezugszeichen wie in Fig. 1 versehen Bauelemente von Fig. 2 liegen schräg zueinander. Die Neigung der optisch wirkenden Oberflächen 4 zueinander ist so gewählt, daß bei einer vorgegebenen Wellenlänge das Licht sowohl beim Eintritt als auch beim Austritt senkrecht durch die optisch wirkenden Flächen 4 geht.

Das in Fig. 2 dargestellte System besteht aus zwei flächig miteinander verklebten Bauelementen, die mit einem weiteren Prisma 5 herkömmlicher Bauart ergänzt sind. Durch eine Aneinanderreihung dispergierender Bauelemente wird die Umlenkung der Strahlrichtung und die Höhe des Dispersionsgrades verstärkt.

Die Fig. 3 zeigt ein zusammengesetztes Bauelement, bei dem der Dispersionsgrad mechanisch einstellbar ist. Hierzu werden zwei lichtzerlegende Bauelemente 3 der Erfindung flächig miteinander verbunden und gegeneinander drehbar gelagert. In einer Endstellung kann die Dispersion eines der Bauelemente von der Dispersion des anderen Bauelementes 3 wieder aufgehoben werden, während die Dispersionseigenschaften sich in der entgegengesetzten Einstellung überlagern. Mit entsprechenden mechanischen Führungsmitteln (nicht gezeichnet) versehen entsteht aus dem in Fig. 3 dargestellten Bauelement ein Stellglied zum Auswählen eines Dispersionsgrades. Die optischen Flächen 6 bleiben dabei parallel zueinander.

In weiterer Ausgestaltung werden die als optisch wirksame Fläche dienenden Begrenzungsflächen 4 mit zylindrischen z.B. kreiszylindrischen Krümmungen 7 versehen, wie in Fig. 4 gezeigt. Es steht bei dieser Ausführungsform die erzeugende Linie senkrecht auf der Ebene der Unterlage 1. Ein solches lichtzerlegendes Bauelement besitzt zugleich auch abbildende Eigenschaften die sich bei Wellenlängen-Multiplexverfahren anwenden lassen, bei dem Licht dicht beieinanderliegender Wellenlängen durch Abbildung und Dispersion zu trennen bzw. zu vereinigen ist und bei dem die Lichtzerlegung möglichst verlustfrei und ohne Nebensprecherscheinungen erfolgt.

Die Fig. 5 zeigt eine weitere Ausführungsform, wobei eine der optisch wirksamen Flächen eine sphärische Krümmung aufweist, wobei die Bezeichnung 1 und 2 ebenfalls die Unterlage und die aufgetragenen Schichten andeuten. Die sphärische Gestaltung ist durch Polieren erhalten. Die Pfeile geben die Lichteinfallsrichtung an.

Philips Patentverwaltung GmbH          PHD 84 303 EP

N.V. Philips' Gloeilampenfabrieken     29.11.1984

Patentansprüche

1. Optisches Bauelement zur Zerlegung des Lichtes nach Wellenlängen, dadurch gekennzeichnet, daß es aus einer Vielzahl auf einer Unterlage aus der Dampfphase abgeschiedener Glasschichten besteht, mit jeweils unterschiedlichem Brechungsindex und daß optisch wirksame Oberflächen vorgesehen sind, die die Ebene der Unterlage durchschneiden.

2. Optisches Bauelement nach Anspruch 1, dadurch gekennzeichnet, daß das Bauelement zwei parallele, optisch wirksame Oberflächen aufweist.

3. Optisches Bauelement nach Anspruch 1, dadurch gekennzeichnet, daß das Bauelement zwei optisch wirksame Oberfläche aufweist, die in sich schneidenden Ebenen liegen, wobei zumindest eine dieser Ebenen nicht senkrecht zu der Ebene der Unterlage ausgerichtet ist.

4. Optisches Bauelement nach Anspruch 1, dadurch gekennzeichnet, daß mindestens eine optisch wirksame Oberfläche eine zylindrische Krümmung aufweist, wobei die erzeugende Linie des Zylinders auf der Ebene der Unterlage ausgerichtet ist.

5. Optisches Bauelement nach Anspruch 4, dadurch gekennzeichnet, daß mindestens eine optisch wirksame Oberfläche eine kreiszylindrische Krümmung aufweist.

6. Optisches Bauelement nach Anspruch 1, dadurch gekennzeichnet, daß mindestens eine optisch wirksame Oberfläche eine sphärische Krümmung aufweist.

7. Zusammengesetztes optisches Bauelement nach einem der Ansprüche 1 bis 3, dadurch gekennzeichnet, daß es aus mindestens zwei mit einer optisch wirksamen Oberfläche miteinander optisch verbundene optische Bauelemente nach Anspruch 1 besteht.

8. Zusammengesetztes optisches Bauelement nach Anspruch 7, dadurch gekennzeichnet, daß zwischen zwei optischen Bauelementen eine Verdrehung einstellbar ist.

FIG.1

FIG.2

FIG.3

FIG.4

FIG.5